# EUROPÄISCHE PATENTANMELDUNG

(11) **EP 4 843 953 A1**
(43) Veröffentlichungstag der Anmeldung: **25.11.2026**
(21) Anmeldenummer: 26178681.8
(22) Anmeldetag: 13.05.2026
(51) Int. Cl.: C01C 1/04, B01J 8/02

(54) **PROZESS ZUM THERMISCHEN KONDITIONIEREN EINER EXOTHERMEN REAKTION IN EINEM FESTBETTREAKTOR**

(30) Priorität: 19.05.2025 DE 102025119383
(71) Anmelder: Deutsches Zentrum für Luft- und Raumfahrt e.V., 53227 Bonn (DE)
(72) Erfinder: Hilgert, Christoph, 51147 Köln (DE); Janotte, Nicole, 53721 Siegburg (DE); Jung, Christian, 53842 Troisdorf (DE); von Rappard, Benedikt, 51147 Köln (DE)
(74) Vertreter: dompatent

(57) **Zusammenfassung**

Die vorliegende Erfindung betrifft Verfahren und Systeme zur Synthese von Ammoniak. Die Synthese umfasst die klassische Reaktion von Wasserstoff mit Stickstoff zu Ammoniak, wobei die Temperaturregelung des Katalysatorbetts durch ein zirkulierendes Silikonöl als Wärmeübertragungsmedium erfolgt. Durch gezielte Beheizung oder Kühlung des Katalysators mittels des Silikonöls kann die Aktivität und Effizienz des Prozesses reguliert werden. Der Einsatz von Silikonöl bietet Vorteile wie hohe Temperaturbeständigkeit und niedrige Koksbildung, was den Betrieb bei extremen Temperaturen ermöglicht.

## Beschreibung

Die vorliegende Erfindung betrifft Verfahren und Systeme zur Synthese von Ammoniak. Die Synthese umfasst die klassische Reaktion von Wasserstoff mit Stickstoff zu Ammoniak, wobei die Temperaturregelung des Katalysatorbetts durch ein zirkulierendes Silikonöl als Wärmeübertragungsmedium erfolgt. Durch gezielte Beheizung oder Kühlung des Katalysators mittels des Silikonöls kann die Aktivität und Effizienz des Prozesses reguliert werden. Der Einsatz von Silikonöl bietet Vorteile wie hohe Temperaturbeständigkeit und niedrige Koksbildung, was den Betrieb bei extremen Temperaturen im Bereich von bis zu 450 °C ermöglicht.

Die Synthese von Ammoniak ist einer der bedeutendsten chemischen Prozesse der modernen Industrie. Ammoniak ist ein Ausgangsstoff für viele Produkte, darunter Düngemittel, Kunststoffe und andere Chemikalien. Der Prozess der Ammoniakherstellung erfolgt typischerweise durch die katalytische Reaktion von Wasserstoff und Stickstoff. Diese Reaktion ist exotherm und erfordert spezifische Bedingungen, wie hohe Temperaturen und Drücke, um effizient zu verlaufen.

Der Haber-Bosch-Prozess ist das traditionelle Verfahren zur Herstellung von Ammoniak und beinhaltet die Verwendung eines Katalysators, meist Eisen, in einem Reaktorbehälter. Eine zentrale Herausforderung bei diesem Prozess ist das Management der Temperatur im Reaktorgefäß, da sowohl die Katalysatoraktivität als auch die Effizienz der Ammoniakproduktion von der genauen Temperatur abhängen.

Wasserstoffbasierte Reduktionsprozesse wie die Hydrierung von Stickstoff zu Ammoniak an einem Festbettkatalysator gemäß des Haber-Bosch-Prozesses verlaufen typischerweise exotherm. Bei der Ammoniaksynthese verschiebt eine Druckerhöhung das Gleichgewicht der Reaktion auf die Produktseite, während es eine Temperaturerhöhung auf die Eduktseite verlagert. Der Prozess wird daher bei einem hohen Druck (~200 bar) und dennoch bei hohen Temperaturen (350-500 °C) betrieben, um ausreichende Reaktionsgeschwindigkeiten zu erzielen. Die erforderlichen Bedingungen bestimmen maßgeblich die Konstruktion von Ammoniakreaktoren. Diese werden so konzipiert, dass der Druckverlust über die Reaktorlänge möglichst klein gehalten wird. Zudem sind Kühlelemente vorgesehen, die dem Prozessmassenstrom Wärme entziehen. Diese Maßnahmen führen dazu, dass industrielle Ammoniakreaktoren einen Edukt-Umsatz von 20-30 % bei einmaligem Reaktordurchlauf erzielen. Neben dem Kühlen des Prozessmassenstroms ist es zugleich erforderlich, den Massenstrom der dem Reaktor zugeführten Edukte vorzuwärmen, um die Aktivierungstemperatur der verwendeten Katalysatoren von ca. 350 °C nicht zu unterschreiten.

Auch wenn unterschiedliche Reaktorbauweisen bekannt sind, so teilen sie die Gemeinsamkeit, dass für die Kühlung ein Gas-Massenstrom aus Edukten eingesetzt wird. Beispielhaft sind Adiabater-Quench-Raktor (AQCR), indirekt gekühlter Reaktor (AICR) oder intern gekühlter Reaktor (IDCR). Diese haben den Nachteil, dass der Betrieb bei schwankender Versorgung mit Edukten problematisch ist. Dies ist insbesondere der Fall, wenn die Edukte der Ammoniakherstellung, Wasserstoff und Stickstoff, mit Hilfe regenerativer Energien gewonnen werden. Diese Schwankungen machen den Betrieb anfällig und erfordern oft die Installation von Pufferspeichern, deren Anschaffungskosten hoch sind.

Der Einsatz von Kühlmedien auf Basis von Biphenyl und Diphenylether führt bei Temperaturen über 400 °C zu einer Verkokung, was langfristige Betriebsrisiken wie Fouling und eine mögliche Schädigung von Komponenten mit sich bringt. Dadurch erhöht sich nicht nur der Wartungsaufwand, sondern es kommen auch hohe Kosten hinzu. Darüber hinaus fehlt bei bestehenden Reaktorbauweisen eine aktive Temperaturregelung, die die Abhängigkeit von exothermer Reaktionswärme verstärkt, ohne dabei die prozessoptimierende Flexibilität und Kontrolle zu bieten. Des Weiteren stellt die Verwendung von Salzschmelzen erhebliche Herausforderungen dar, da sie ein Begleitheizungssystem oder eine Selbstentleerung erfordert, um Erstarrung zu vermeiden, was wiederum zu komplexen materialtechnischen Schwierigkeiten führen kann. Zudem sind Salzschmelzen korrosiv, wodurch hochwertigere und somit teurere Werkstoffe erforderlich werden. Infolgedessen bieten diese Reaktorsysteme keine ausreichende Kontrolle über die Prozessparameter zur Energieoptimierung oder Produktionsflexibilität, was in einem marktgerechten und effizienten Betrieb eine entscheidende Einschränkung darstellt.

Konventionelle Ammoniaksynthesereaktoren (Haber-Bosch-Verfahren) werden autotherm betrieben, wodurch sie unflexibel hinsichtlich einer unstetigen Edukt-Beschickung sind. Bei schwankender oder unterbrochener Zufuhr von Edukten (z. B. durch erneuerbare Energien) kann es zu instabilen Betriebszuständen kommen, die zu einer Unterschreitung der benötigten Katalysatorbetttemperatur führen. Dieser Umstand kann zu einer Deaktivierung des Katalysators und damit zu einem Abbruch der Synthese führen, wodurch der Reaktor neu hochgefahren werden müsste. Zudem sind konventionelle Ammoniaksynthesereaktoren energie- und wartungsintensiv, da die Temperaturen im Katalysatorbett 500 °C überschreiten können.

So gibt Erfani et al., Recent advances and intensifications in Haber-Bosch ammonia synthesis process, in Chemical engineering and processing - process intensification, Vol. 204, 2024, einen Überblick über die kürzliche Entwicklung zur Verfahrensführung bei der Haber-Bosch-Synthese.

Ferner untersuchten Richard et al., Power-to-ammonia synthesis process with membrane reactors techno-economic study, in International journal of hydrogen energy, Vol. 73, 2024, S. 462-474, katalytische Membranreaktoren (CMR) zur Ammoniaksynthese aus erneuerbarem Wasserstoff. Hierzu kombinierten die Autoren Ruthenium-Katalysatoren mit selektiven Membranen und untersuchten diese mittels Prozesssimulation.

Rosbo et al., Comparison, operation and cooling design of three general reactor types for Power-to-Ammonia processes, in Chemical engineering journal, Vol. 496, 2024, untersuchte verschiedene Reaktorkonzepte für Power-to-Ammonia-Prozesse, insbesondere adiabate Quench-, indirekt gekühlte und intern direkt gekühlte Reaktoren, hinsichtlich Wärmeübertragung, Umsatz und Dynamik. Dabei zeigten indirekt und intern gekühlte Reaktoren höhere Umsätze und stabileres Betriebsverhalten als Quench-Reaktoren, deren Dynamik zu instabilen Oszillationen neigt.

CN 1 18 978 172 A betrifft eine Vorrichtung und ein System zur Ammoniaksynthese bei niedrigen Temperaturen und Drücken unter Verwendung erneuerbarer Energiequellen. Die Vorrichtung umfasst einen Reaktor mit mehreren Katalysatorlagen, integrierten Strömungskanälen und einem Wärmetauscher, wodurch eine effiziente Wärmeübertragung und präzise Temperaturregelung ermöglicht wird. Dadurch werden die Reaktionsbedingungen verbessert sowie Energieverbrauch und Betriebskosten reduziert.

Bisher eingesetzte Wärmeübertragungsmedien wie Wasser, Dampf oder klassische Thermoöle sind entweder korrosiv, neigen zur Koksbildung, benötigen hohen Druck oder sind betrieblich aufwändig.

Es besteht daher Bedarf an einem Verfahren zur Herstellung von Ammoniak, bei welchem diese Nachteile reduziert oder vermieden werden. Überraschenderweise hat sich gezeigt, dass dies durch den Einsatz von Silikonölen als Wärmeübertragungsmedium möglich ist. Die der vorliegenden Erfindung zu Grunde liegende Aufgabe wird daher gelöst durch ein Verfahren zur Synthese von Ammoniak, einen Ammoniaksyntheseraktor und die Verwendung eines Silikonöls als Wärmeübertragungsmedium, wie in den unabhängigen Ansprüchen beschrieben. Bevorzugte Ausgestaltungen sind in den abhängigen Ansprüchen erläutert.

Überraschenderweise hat sich gezeigt, dass die Flexibilität, Effizienz und Zuverlässigkeit von Ammoniaksynthesereaktoren und damit der Ammoniaksynthese durch eine gezielte Temperaturregelung mittels Silikonöl zu optimieren ist und gleichzeitig die Betriebskosten gesenkt werden können.

Der Einsatz eines Silikonöls, insbesondere auf der Basis einer niedrigviskosen Mischung von linearen und cyclischen Methylpolysiloxanen wie sie beispielsweise in DE 10 2012 211258 A1 oder EP 4 021 981 B1 beschrieben ist, als Wärmeübertragungsmedium ermöglicht eine stabile Temperaturführung und homogene Temperatur während des Verfahrens, da Silikonöle eine erstaunlich hohe Wärmespeicherkapazität aufweisen, was so bisher nicht bekannt war. Hierdurch kann die Temperatur im Bereich von etwa 1 K konstant gehalten werden. Hierfür kann das Wärmeübertragungsmedium durch Rohre oder Kanäle geführt werden, die innerhalb des oder um das Katalysatorbett angeordnet sind, und steht so in thermischem Kontakt mit dem Katalysatorbett. Hierdurch wird sowohl das aktive Heizen als auch das Kühlen des Katalysatorbetts über denselben Kreislauf ermöglicht. Überraschenderweise hat sich zudem gezeigt, dass die Silikonöle auch bei Temperaturen von bis zu 450 °C hinreichend stabil sind und somit alle während der Ammoniaksynthese auftretenden Temperaturen bis zu 450 °C stabil aufnehmen können und sich nicht dabei in störender Weise zersetzen.

Das erfindungsgemäße Verfahren zur Synthese von Ammoniak umfasst die folgenden Schritte:
- Bereitstellen von Wasserstoff und Stickstoff als Eduktgase;
- Wahlweise Komprimieren und/oder wahlweise Vorwärmen der Eduktgase;
- Einleiten der Eduktgase in ein Reaktorgefäß mit einem Katalysatorbett;
- Zirkulieren eines auf Silikonöl basierenden Wärmeübertragungsmediums in thermischem Kontakt mit dem Katalysatorbett zur Temperaturregelung des Katalysatorbetts;
- Wahlweises Beheizen oder Kühlen des Katalysatorbetts durch Einstellung der Temperatur des Silikonöls;
- Abtrennen von Ammoniak aus dem Reaktorproduktstrom.

Als innovatives Wärmeübertragungsmedium wird erfindungsgemäß ein Methylpolysiloxan-basiertes Öl, insbesondere basierend auf einer Methlypolysiloxanmischung eingesetzt. Es können auch Mischungen zweier oder mehrerer verschiedener Silikonöle eingesetzt werden. Neben dem oder den Silikonölen enthält das Wärmeübertragungsmedium bevorzugt keine Stabilisatoren oder ähnliche Additive, da diese zu Ablagerungen führen, die den Wärmeübergang beeinträchtigen können. Die Reaktion von Wasserstoff und Stickstoff zu Ammoniak findet vorteilhafterweise bei Temperaturen im Bereich von 370 °C bis 450 °C statt. Stabilisatoren, die in anderen Wärmeübertragungsmedien enthalten sind, bilden bei Temperaturen ab 400 °C nicht lösliche Beläge auf Wärmeübertrageoberflächen. Dieses Problem kann somit vermieden werden.

Auch eine eventuelle Permeation von Wasserstoff in das Wärmeübertragungsmedium ist unproblematisch. Es entstehen keine besonderen Nebenprodukte, die schädlich oder gefährlich sein könnten. Gegebenenfalls kann die Wärmespeicherkapazität des Wärmeübertragungsmediums etwas reduziert oder dessen Dampfdruck etwas erhöht werden. Um dies zu vermeiden, kann das Wärmeübertragungsmedium gereinigt werden. Diese Aufreinigung kann kontinuierlich oder diskontinuierlich erfolgen. Bei einer kontinuierlichen Aufreinigung wird das Wärmeübertragungsmedium oder ein Teilstrom hiervon aus dem eigentlichen Temperierungskreislauf abgeführt, aufgereinigt und dann wieder zurückgeführt. Bei einer diskontinuierlichen Reinigung kann entweder das gesamte Wärmeübertragungsmedium oder ein Teil hiervon zu einem bestimmten Zeitpunkt entnommen und aufgereinigt und anschließend zurückgeführt werden.

Das Verfahren zur Aufreinigung kann Technologien umfassen, die chemische Verunreinigungen oder andere unerwünschte Bestandteile wirkungsvoll entfernen, um die thermische Effizienz und die Langzeitstabilität des Wärmeübertragungsmediums zu unterstützen. Entsprechende Verfahren wie die destillative Abtrennung von leicht oder schwer siedenden Zersetzungsprodukten, Stripping-Prozesse zur Eliminierung gelöster Gase oder leicht flüchtiger Zersetzungsprodukte, die Adsorption von Spurenverunreinigungen an Aktivkohle oder ähnlichen Adsorbenzien oder die selektive Eliminierung von gelöstem Wasserstoff mittels Katalyse bzw. durch selektive Filtration bspw. mittels einer Palladiummembran sind der Fachperson bekannt.

Die periodische oder kontinuierliche Aufreinigung des Silikonöls kann die Gesamtleistung des Syntheseverfahrens unterstützen, indem sie eine stabile und effektive Temperaturregelung innerhalb des Reaktors ermöglicht. Dies könnte eine Verbesserung der Prozesskontrolle und der Qualität des Produkts bewirken.

Das Wärmeübertragungsmedium enthält erfindungsgemäß wenigstens ein Silikonöl auf der Basis einer niedrigviskosen Mischung von linearen und cyclischen Methylpolysiloxanen wie sie beispielsweise in DE 10 2012 211258 A1 oder EP 4 021 981 B1 beschrieben sind. Auf deren Inhalt und insbesondere die dort beschriebenen Methylpolysiloxane wird hiermit explizit Bezug genommen. Es kann auch zwei, drei oder Mischungen aus mehr Silikonölen enthalten. Bevorzugt besteht es aus einem, zwei oder drei Silikonölen. Besonders bevorzugt besteht es aus einem oder zwei, insbesondere aus einem Silikonöl. Dies hat den Vorteil einer besonders guten Temperaturführung im Ammoniaksyntheseverfahren.

Geeignete Silikonöle sind solche, die bei Temperaturen von 400 °C oder darüber, bevorzugt bis zu 450 °C nicht verkoken. Sie sind flüssig und haben damit einen deutlich höheren Wärmeübergangskoeffizienten als gasförmige Wärmeübertragungsmedien. Auch ist die Wärmekapazität eines Silikonöls deutlich höher als die eines gasförmigen Wärmeübertragungsmediums. Zudem sind Silikonöle auch dadurch sicher, dass bei eventuellen Bränden oder anderen Störungen in der Anlage keine giftigen oder den Brand verstärkenden Stoffe entstehen.

Silikonöle sind somit bis zu Temperaturen von ca. 450 °C stabil, bilden keinen Koks, sind nicht korrosiv und haben einen niedrigen Schmelzpunkt. Besonders bevorzugt ist das Silikonöl als Wärmeübertragungsmedium genutzt, das durch eine niedrigviskose Mischung von linearen und cyclischen Methylpolysiloxanen wie sie beispielsweise in den bereits genannten DE 10 2012 211258 A1 oder EP 4 021 981 B1 beschrieben ist. Die dort beschriebenen Silikonöle haben sich als besonders geeignet und gut handhabbar herausgestellt.

Das erfindungsgemäße Verfahren umfasst, dass zunächst die Edukte, Wasserstoff und Stickstoff, bereitgestellt werden. In einer bevorzugten Ausführungsform des erfindungsgemäßen Verfahrens werden die Edukte mit Hilfe regenerativer Energien gewonnen. So kann Wasserstoff mittels Elektrolyse gewonnen werden, wobei der hierfür notwendige Strom mittels regenerativer Energien (Solarenergie, Windenergie, Wasserenergie, etc.) erhalten wird. Stickstoff kann beispielsweise durch Verflüssigung von Luft erhalten werden. Auch hier kann die notwendige Energie zu der Kompression der Luft mittel regenerativer Energien erhalten werden.

Werden Wasserstoff und Stickstoff unter Verwendung von regenerativen Energien erhalten, so kann es preisbedingt zu Schwankungen in der Bereitstellung der Edukte kommen. Diese Schwankungen spiegeln die Verfügbarkeit der regenerativen Energien wider. Bei konventionellen Verfahren zur Herstellung von Ammoniak führt diese Schwankung an Verfügbarkeit der Edukte dazu, dass aufwändige Pufferspeicher bereitgestellt werden, um den Reaktor konstant in seinem Auslegungsbereich zu betreiben. Dies ist aufwändig und teuer. Durch das erfindungsgemäße Verfahren kann dies vermieden werden. Das Wärmeübertragungsmedium kann die Wärme so effektiv speichern und gleichzeitig gut an das Reaktorbett abgeben, dass die notwendige Arbeitstemperatur lange erhalten bleibt. Bei einem Überschuss an Edukten gegenüber der eigentlich geplanten Menge, wird die bei der Reaktion entstehende Wärme effektiv abgeführt. Das Wärmeübertragungsmedium dient dann auch als Energiespeicher. Es kann erfindungsgemäß auch dafür verwendet werden, die Edukte vorzuwärmen. Die Reaktion zur Ausbildung von Ammoniak ist exotherm. Die entstehende Wärme wird an das Wärmeübertragungsmedium abgegeben. Das Wärmeübertragungsmedium kann dann an einen Ort transportiert werden, an dem die Edukte breitgestellt werden. Diese können dann auch durch das Wärmeübertragungsmedium temperiert, insbesondere vorgewärmt, werden. Hierdurch wird das Verfahren besonders effektiv, da eine Abkühlung des Reaktorbetts durch den Zustrom der Edukte unterbleibt oder zumindest verringert wird.

Neben der Temperierung der Edukte, kann das Wärmeübertragungsmedium auch genutzt werden, um andere Bereiche eines Reaktors, in welchem das erfindungsgemäße Verfahren durchgeführt wird, zu temperieren. Dabei kann Wärme vom Wärmeübertragungsmedium aufgenommen oder an die Umgebung abgegeben werden. Überschüssige Wärme kann zudem genutzt werden, um beispielsweise Wasserdampf zu erzeugen und damit Strom zu gewinnen. Auch andere Prozessanforderungen, welche temperaturabhängig sind, können so erfüllt werden.

Die überschüssige Wärme, die durch die exotherme Reaktion bei der Bildung von Ammoniak aus Wasserstoff und Stickstoff entsteht, kann mit Hilfe des Wärmeübertragungsmediums auch transportiert werden und dann für einen anderen Prozess, der unabhängig von der Ammoniakherstellung ist, genutzt werden. Auch die Speicherung von Wärme mit Hilfe des Wärmeübertragungsmediums und spätere Nutzung im Ammoniakherstellverfahren oder einem anderen Verfahren ist erfindungsgemäß möglich.

Das Katalysatorbett enthält erfindungsgemäß übliche Katalysatoren, mit welchen die Umsetzung von Wasserstoff und Stickstoff zu Ammoniak ermöglicht wird. Diese sind der Fachperson hinlänglich bekannt. Insbesondere umfasst das Katalysatorbett Katalysatoren basierend auf Eisen, Eisenoxid(en), Ruthenium, Molybdän oder Cobalt.

Das erfindungsgemäße Verfahren zur Synthese von Ammoniak umfasst somit mehrere vorteilhafte Schritte, die eine effiziente und kontrollierte Ammoniakproduktion begünstigen. Zunächst werden Wasserstoff und Stickstoff als Eduktgase bereitgestellt, welche die grundlegenden Bestandteile der chemischen Reaktion zur Ammoniakbildung umfassen. Diese Gase können bevorzugt einem Prozess der Komprimierung und/oder Vorwärmung unterzogen werden, um geeignete Bedingungen für die Reaktionsgeschwindigkeit und die Katalyse zu erhalten.

Im nächsten Schritt werden die, bevorzugt komprimierten und/oder vorgewärmten, Eduktgase in ein spezielles Reaktorgefäß eingebracht, das ein Katalysatorbett beinhaltet. Das Katalysatorbett ermöglicht den Prozess der Umwandlung der Eduktgase in Ammoniak und wird optimalerweise bei passender Temperatur gehalten. Dazu ist ein Wärmeübertragungsmedium auf Silikonölbasis in thermischen Kontakt mit dem Katalysatorbett schaltbar. Diese Methode der Temperaturregelung bietet eine hohe Wirksamkeit bei der Kontrolle der Reaktionstemperatur und verbessert die Effizienz der Ammoniakproduktion.

Je nach den spezifischen Anforderungen der Reaktion lässt sich das Katalysatorbett entweder beheizen oder kühlen, indem die Temperatur des Silikonöls passend eingestellt wird. Diese Möglichkeit zur wahlweisen Beheizung oder Kühlung ermöglicht es, die Reaktion unter fein abgestimmten thermodynamischen Bedingungen durchzuführen, welche für maximale Reaktionsausbeute und Effizienz günstig sind.

Im letzten Schritt wird Ammoniak aus dem Reaktorproduktstrom abgetrennt, wodurch das Endprodukt mit hoher Reinheit erhältlich ist. Eine hohe Reinheit des Endproduktes im Sinne der vorliegenden Erfindung bedeutet eine Reinheit von mindestens 95 Gew.-%, bevorzugt von 98 Gew.-%, besonders bevorzugt 99 Gew.-%, ganz besonders bevorzugt 99,5 Gew.-%.

Die innovative Anwendung der temperaturregelnden Eigenschaften von Silikonöl im Katalysatorbett hebt sich von traditionellen Methoden ab, indem sie eine verbesserte Kontrolle über die Reaktionsbedingungen und eine optimierte Produktionseffizienz fördert. Durch die Möglichkeit der Verwendung der zurückgewonnenen Wärme für die Vorwärmung der Eduktgase kann der Energieverbrauch des Prozesses insgesamt verbessert und die Effizienz gesteigert werden.

Durch die gezielte Rückgewinnung und Nutzung der Wärme aus dem Silikonöl kann eine optimierte Energiemanagementstrategie entstehen, die den Umwelteinfluss der Produktion verringert und die Nachhaltigkeit des Verfahrens verbessert. Dies kann zur Konkurrenzfähigkeit der Prozessführung beitragen und den technologischen Fortschritt in der industriellen Ammoniaksynthese unterstützen. In dieser bevorzugten Ausführungsform kann die zurückgewonnen Wärme aus dem Silikonöl zudem für nicht direkt mit der Ammoniaksynthese verbundene Dampferzeugung oder für weitere Prozessanforderungen genutzt werden. Hierzu zählen insbesondere die Integration von Reformierungsschritten, das Zusammenschalten mehrerer Reaktorstufen sowie die Kopplung mit nachgeschalteten chemischen Prozessen wie etwa Harnstoff-, Salpetersäure- oder Methanolherstellungsanlagen. Darüber hinaus kann die Prozesswärme auch in Einheiten wie Gasaufbereitung oder Luftzerlegung eingesetzt werden. Die genannten Beispiele sind nicht limitierend. Der Fachmann weiß die abgetragene Wärme auch in vergleichbare Prozesse zu integrieren. Auf diese Weise lässt sich die Energieeffizienz signifikant steigern und der externe Energiebedarf der Anlage nachhaltig reduzieren.

Durch den Einsatz von Silikonölen im erfindungsgemäßen Verfahren können niedrigere Temperaturen als bei konventionellen Ammoniaksyntheseverfahren erreicht werden. Dadurch konnte eine höhere Umsatzrate erzielt werden, wodurch sich das vorliegende Verfahren besonders auszeichnet.

Die der vorliegenden Erfindung zu Grunde liegende Aufgabe wird weiterhin gelöst durch einen Ammoniaksynthesereaktor, umfassend:
- ein Reaktorgefäß mit einem Katalysatorbett zur Katalyse der Reaktion von Wasserstoff und Stickstoff zur Bildung von Ammoniak;
- ein Wärmeübertragungssystem mit einem Kreislauf zur Zirkulation eines Wärmeübertragungsmediums in thermischem Kontakt mit dem Katalysatorbett;
- wobei das Wärmeübertragungsmedium ein Silikonöl umfasst, das für den Betrieb bei Temperaturen von mindestens 400 °C, bevorzugt bis zu 450 °C geeignet ist;
- wobei das Wärmeübertragungssystem so ausgestaltet ist, dass es das Katalysatorbett durch Zirkulation des Wärmeübertragungsmediums bei gesteuerter Temperatur derselben temperieren kann.

Temperieren im Sinne der vorliegenden Erfindung bedeutet, dass das Katalysatorbett bedarfsgerecht gekühlt oder erwärmt werden kann. Damit wird es ermöglicht, die Temperatur des Katalysatorbetts möglichst stabil zu halten und bei Bedarf Wärme hinzuzufügen oder die während der Reaktion entstehende Wärme abzuführen. Der erfindungsgemäße Reaktor verfügt über eine besonders flexible und effiziente Energieverwaltung, selbst bei voller Auslastung. In einem beispielhaften Ausführungsbeispiel kann er überschüssige Energie, die während der Ammoniaksynthese auftritt, gezielt abführen. Diese überschüssige Energie wird über einen Wärmeübertrager, der nahtlos in das System integriert werden kann, zu anderen Prozessen umgeleitet. Dabei ist der Wärmeübertrager dazu geeignet, die Energie in Form von Wärme bereitzustellen, sodass diese dann im Rahmen anderer industrieller Anwendungen genutzt werden kann. Ein besonders passendes Beispiel für die Nutzung dieser abgeführten Wärme ist ihr Einsatz in Dampfturbinen oder als Prozesswärme.

Die Einbindung des Wärmeübertragers eröffnet vielversprechende Optionen zur Steigerung der Prozesswirtschaftlichkeit und Energieeffizienz. Indem die erzeugte überschüssige Energie zu Dampfturbinen weiterleitbar ist, entsteht zusätzlich nutzbare mechanische Energie, die entweder direkt zur Unterstützung betrieblicher Abläufe verwendet werden kann oder in Form von elektrischem Strom zurück ins Produktionssystem geleitet werden könnte. Dies kann insgesamt zu einer signifikanten Reduzierung des externen Energiebedarfs führen, wodurch Betriebskosten gesenkt und die Abhängigkeit von fossilen Brennstoffen verringert werden könnte.

Darüber hinaus erhöht der Wärmeübertrager die Flexibilität des Systems, da er überschüssige Energie unmittelbar nutzbar macht, anstatt sie ungenutzt oder verschwenderisch abzuführen. Durch die geschickte Integration eines solchen Mechanismus wird die Umwelteinwirkung der Produktionsprozesse weiter minimiert, wodurch das Gesamtsystem nicht nur ökologisch nachhaltiger, sondern auch wirtschaftlich rentabler gestaltet werden könnte.

Im erfindungsgemäßen Verfahren kann das Katalysatorbett auf einer Temperatur oberhalb einer Mindestaktivierungstemperatur von mindestens 370 °C gehalten werden, selbst während Zeiten mit reduziertem oder keinem Eduktstrom. Diese Aufrechterhaltung wird durch das kontinuierliche Zirkulieren des Wärmeübertragungsmediums, das auf Silikonöl basiert, unterstützt. Die Fähigkeit, die Temperatur des Katalysatorbetts konstant zu halten, begünstigt, dass die Katalysatoraktivität durchgehend auf einem betriebsbereiten Niveau bleibt.

Die durchgehende Temperaturkontrolle kann das Risiko einer Deaktivierung des Katalysators verringern, die in Zeiten ohne aktiven Reaktionsfluss auftreten könnte, und hilft bei einer schnellen Wiederaufnahme der Reaktion, sobald der Eduktstrom wieder beginnt. Diese Methode unterstützt die Katalysatorfunktionalität und reduziert den Prozessaufwand, der ansonsten zur Aktivierung des Prozesses nach einer Ruhephase erforderlich sein könnte.

Die Temperaturregelung mit einem Wärmeübertragungsmedium auf Silikonölbasis trägt zur Erhaltung der günstigen Betriebsbedingungen bei. Dies fördert die Effizienz des Reaktionsprozesses und unterstützt eine schnelle Anpassung an variierende Produktionsanforderungen.

Diese Eigenschaft des Verfahrens weist auf die Vorteile einer robusten Temperatursteuerung hin, förderlich um nicht nur während des normalen Betriebs, sondern auch in variablen Produktionsphasen eine konstante Reaktionsbereitschaft ermöglichen zu können. Eine robuste Temperatursteuerung im Sinne der vorliegenden Erfindung bedeutet, dass das Verfahren eine geringe Anfälligkeit gegenüber Temperaturschwankungen aufweist, wodurch eine konstante Reaktionsbereitschaft ermöglicht wird. Vorzugsweise beträgt die Temperaturschwankung nicht mehr als ±15 °C, bevorzugt nicht mehr als ±10 °C und in einer besonders bevorzugten Ausführungsform nicht mehr als ±7 °C. Dies kann zur Verbesserung der Gesamtsystemeffizienz und zur Optimierung der Prozesskontinuität beitragen.

Zusätzlich zum beschriebenen Verfahren, das die kontinuierliche Zirkulation eines Wärmeübertragungsmediums auf Silikonölbasis zur Aufrechterhaltung der Temperatur des Katalysatorbetts unterstützt, bietet das beispielhafte Ausführungsbeispiel, bei welchem ein oder beide Eduktströme reduziert sind, eine weitere Verbesserung in Bezug auf die thermische Betriebsweise des Katalysatorbetts.

In diesem Ausführungsbeispiel wird ein effizienter Wärmeabzug bei verminderten Eduktströmen oder sogar in deren Abwesenheit durch den Einsatz präziser Temperaturregelung und gezielter Beheizung ermöglicht. Diese Maßnahmen zielen darauf ab, die Reaktionstemperatur des Katalysatorbetts konstant nahe der benötigten Aktivierungstemperatur zu halten. Das bedeutet, dass auch in Zeiten, in denen der Eduktstrom reduziert ist oder vollständig pausiert, die Wärmekontrolle nicht nur die minimale Funktionsfähigkeit des Katalysators unterstützt, sondern aktive Bedingungen ermöglicht, die den Reaktionsprozess fördern.

Der erfindungsgemäße Ammoniaksynthesereaktor umfasst ein Reaktorgefäß, in dem ein Katalysatorbett positioniert ist. Dieses Katalysatorbett trägt dazu bei, die Reaktion zwischen Wasserstoff und Stickstoff zu katalysieren, um Ammoniak zu erzeugen.

Der Reaktor umfasst zur unterstützenden Temperaturregelung des Katalysatorbetts ein Wärmeübertragungssystem mit einem Kreislauf, das die Zirkulation eines Wärmeübertragungsmediums in thermischem Kontakt mit dem Katalysatorbett ermöglicht. Das verwendete Wärmeübertragungsmedium umfasst zumindest ein Silikonöl, das für den Betrieb bei hohen Temperaturen von etwa 400 °C, bevorzugt bis zu 450 °C geeignet ist. Dieses Silikonöl zeigt vorteilhafte Wärmetransportfähigkeiten und thermische Stabilität, wodurch das Katalysatorbett bei nahezu optimalen Temperaturbedingungen betrieben werden kann. Dadurch kann auch eine höhere Umsatzrate erzielt werden, die das vorliegende Verfahren besonders effizient macht.

Das Wärmeübertragungssystem trägt zur gezielten Temperaturregelung bei und unterstützt somit die Funktionalität des Reaktors. Indem es das Katalysatorbett durch Zirkulation des Silikonöls bei kontrollierter Temperatur beheizen oder kühlen kann, bietet es Optionen für Flexibilität und Präzision in der Reaktionskontrolle. Diese dynamische Anpassung der Temperatur kann eine effektive Katalyse unterstützen und die Produktionsausbeute von Ammoniak optimieren.

Das designierte System fördert eine kontrollierte Reaktionstemperatur, um ungewollte Temperaturspitzen zu minimieren und eine stabile Leistung des Gesamtsystems zu erreichen. Es bewirkt eine Anpassung des Reaktionsprozesses gemäß spezifischer Produktionsanforderungen und trägt zur Energieeffizienz des gesamten Syntheseverfahrens bei.

Der erfindungsgemäße Reaktor kann somit flexibel betrieben werden: schnelle Start- und Stopp-Vorgänge, Betrieb bei schwankender oder unterbrochener Gaszufuhr, sowie Überlastbetrieb durch erhöhte Kühlleistung sind möglich.

Die Temperatur des Katalysatorbetts kann unabhängig vom Reaktionsverlauf gehalten werden, was insbesondere bei Integration erneuerbarer Energien (Power-to-X) von Vorteil ist. Überschüssige Wärme kann zudem effizient für andere Prozesse genutzt oder gespeichert und oder zurückgeführt werden.

Besonders geeignet kann der erfindungsgemäße Reaktor für Ammoniaksyntheseanlagen, die mit erneuerbaren Energien betrieben werden und daher flexible Betriebsweisen erfordern, eingesetzt werden. Allgemein ist er einsetzbar für andere exotherme Reaktionen, bei denen flexible Temperaturführung und hohe Betriebssicherheit gefordert sind.

Der Reaktor ist erfindungsgemäß so konzipiert, dass das Wärmeübertragungssystem eine Vielzahl von Rohren oder Kanälen umfasst, die entweder im Katalysatorbett eingebettet oder das Katalysatorbett umgebend angeordnet sind. Diese Anordnung kann eine effektive und gleichmäßige Wärmeverteilung innerhalb des Katalysatorbetts ermöglichen, wodurch die Temperaturregelung des Reaktors verbessert werden kann.

Die Einbettung oder das umgebende Platzieren der Rohre oder Kanäle sorgt dafür, dass das Wärmeübertragungsmedium, in diesem Fall das Silikonöl, direkt und effizient mit den Bereichen des Katalysatorbetts in Kontakt kommt, in denen die Reaktion zwischen Wasserstoff und Stickstoff stattfindet. Dies kann eine gleichmäßige Temperaturkontrolle bieten und dazu beitragen, dass das Katalysatorbett kontinuierlich bei passenden Reaktionsbedingungen aktiviert bleibt.

Diese Struktur des Wärmeübertragungssystems erleichtert eine präzise Steuerung der Heiz- oder Kühlprozesse, damit die gewünschten thermischen Bedingungen im Katalysatorbett aufrechterhalten werden können. Diese Anordnung kann zur Effizienzsteigerung und Produktionskapazität des Reaktors beitragen und eine robuste und flexible Ammoniakproduktion fördern.

Ein vorteilhaftes Merkmal des erfindungsgemäßen Wärmeübertragungsmediums ist seine ausgezeichnete thermische Stabilität in Hochtemperaturbereichen, also eine Temperatur von mindestens 370 °C. Durch seine Widerstandsfähigkeit gegen Verkokung wird das Risiko von Ablagerungen und Blockaden innerhalb des Wärmeübertragungssystems minimiert, was eine kontinuierliche und effiziente Wärmeübertragung sicherstellen kann. Diese Eigenschaft ist in Prozessen der Ammoniaksynthese hilfreich, bei denen gleichmäßige Wärmeübergangsbedingungen von Nutzen sind.

Die Fähigkeit des Wärmeübertragungsmediums, bei Temperaturen bis zu 450 °C verwendet zu werden, kann eine flexible Ammoniaksynthese ermöglichen, die sich an veränderliche Betriebsbedingungen anpassen kann. Diese Flexibilität ist hilfreich, wenn beispielsweise die Energieversorgung des Gesamtprozesses, angefangen bei der Herstellung und Bereitstellung der Edukte, des Betriebs des Ammoniak-Reaktors an sich und die Produktgewinnung, schwankend ist. Die gezielte Nutzung dieses speziellen Silikonölwärmeträgers trägt zur gleichmäßigen Reaktionsführung bei und kann die Optimierung der thermischen Bedingungen im Katalysatorbett unterstützen, um eine kontinuierliche Aktivierung der Katalysatoren zu ermöglichen. Insgesamt trägt das erfindungsgemäße Wärmeübertragungssystem dazu bei, die Robustheit und Produktionskapazität des Reaktors zu maximieren und kann sich positiv auf die Kostenstruktur und Umweltverträglichkeit der Ammoniakproduktion auswirken.

Der Reaktor kann optional einen Speichertank für das Wärmeübertragungsmedium, insbesondere das Silikonöl, umfassen, in dem das Öl gelagert und bereitgestellt werden kann. Der Speichertank bewirkt eine effiziente Verwaltung und Bereitstellung des Silikonöls für die Wärmeregulierungsprozesse innerhalb des Reaktors. Alternativ kann mit dem Wärmeübertragungsmedium ein thermischer Speicher auf der Basis von Salzschmelzen, Sand, Beton oder anderen thermisch hinreichend stabilen Materialien erhitzt werden, um die Wärmespeicherungskosten zu senken.

In einer weiteren bevorzugten Ausführungsform umfasst der erfindungsgemäße Reaktor einen Ausdehnungs-/ Pufferbehälter für das Silikonöl. Dieser Behälter dient dazu, die thermische Ausdehnung beim Erwärmen des Wärmeübertragungsmediums zu kompensieren. Ferner kann hier Inertgas, wie beispielsweise Stickstoff oder Argon, zur Inertisierung und zur Siedepunktkontrolle des Öls in eingebracht werden. Das Inertgas wird bevorzugt in den Gasraum eingebracht. Optional kann der Ausdehnungsbehälter bzw. Expansionstank an eine Gasaufbereitungseinheit und/oder Leichtsiederabtrennungsvorrichtung angebunden sein.

Eine Pumpe ermöglicht die Zirkulation des Silikonöls durch das Wärmeübertragungssystem. Diese Pumpe ist geeignet, das Öl bedarfsgerecht und kontrolliert durch die Rohre oder Kanäle innerhalb oder um das Katalysatorbett zu bewegen, was eine gleichmäßige Wärmeverteilung und Temperatursteuerung im Reaktor bewirken kann.

Ein Strömungserhitzer kann vorgesehen sein, um das Silikonöl vor dessen Zirkulation durch den Reaktor zu erwärmen. Diese Vorwärmung kann sicherstellen, dass das Öl die gewünschte Temperatur erreicht, um die Funktion des Katalysatorbetts zu unterstützen und die Effizienz der Ammoniakproduktion zu fördern.

Zusammen können Speichertank, Pumpe und Heizer ein System zur Steuerung des Wärmeübertragungsmediums bzw. der Wärmeübertragungsmedien bilden, wodurch die thermischen Bedingungen im Katalysatorbett regulierbar sind, um eine gleichbleibende Leistungsfähigkeit und Produktionseffizienz zu ermöglichen.

Darüber hinaus kann die unabhängige Steuerung der Reaktortemperatur in Bezug auf die Eduktversorgung ein abgestimmtes System erfordern, das präzise reagieren kann. Das Silikonöl unterstützt dies durch seine Fähigkeit, schnell auf Temperaturänderungen zu reagieren und die Wärme gleichmäßig im Katalysatorbett zu verteilen. Diese Funktion minimiert das Risiko von Hotspots oder ungleichmäßiger Wärmeverteilung, die die Effizienz der katalytischen Prozesse beeinträchtigen könnten.

Das Ergebnis der vorliegenden Erfindung ist eine verbesserte Gesamtleistung des Reaktors. Durch die isolierte Kontrolle der Temperatur wird ein stabiler Betrieb ermöglicht, unabhängig von Schwankungen in der Eduktzufuhr oder anderen äußeren Einflüssen. Das erfindungsgemäß verwendete Wärmeübertragungsmedium stellt eine bedeutsame Komponente im Wärmeübertragungssystem dar, die es ermöglicht, die Bedingungen innerhalb des Reaktors anzupassen, um eine maximale Effizienz und verstärkte Effektivität der Ammoniakproduktion zu fördern.

Das Wärmeübertragungssystem kann so konfiguriert werden, dass es eine zonale Temperaturregelung entlang des Katalysatorbetts umfasst. Diese Konfiguration ermöglicht eine genaue Steuerung der Temperaturverhältnisse in verschiedenen Bereichen des Katalysatorbetts, was die optimierte und gezielte Katalyse unterstützen kann.

Die zonale Temperaturregelung kann unterschiedliche Bereiche des Katalysatorbetts basierend auf spezifischen thermischen Anforderungen gezielt beheizen oder kühlen. Dies könnte bei der Anpassung an lokale Variationen der Reaktionsbedingungen hilfreich sein, die durch unterschiedliche Reaktionsphasen oder Lastwechsel entstehen.

Mit der zonalen Temperaturregelung kann das Wärmeübertragungssystem dynamisch auf verknüpfbare Prozessschritte eingehen und ausgewählte Teile des Katalysatorbetts gezielt beeinflussen. Dies ermöglicht eine fein abgestimmte Katalysatoraktivität, die auf die spezifischen Anforderungen der Synthese abgestimmt werden kann und zur optimalen Nutzung des Reaktors beitragen kann.

Darüber hinaus umfasst die zonale Regelung die Möglichkeit, die thermische Gesamteffizienz des Reaktors zu verbessern, indem sie eine ausgeglichene und kontrollierbare Wärmeverteilung sicherstellt, die dazu dienen kann, Hotspots zu vermeiden und gleichmäßige Bedingungen für die chemische Reaktion zur Bildung von Ammoniak zu schaffen.

Das im Reaktor verwendete Wärmeübertragungsmedium besitzt bevorzugt einen Schmelzpunkt unter 0°C, wodurch eine sehr behilfliche Fließfähigkeit des Ölmediums auch bei niedrigen Temperaturen möglich ist. Diese Eigenschaft kann den flexiblen Einsatz bei variablen Umgebungsbedingungen unterstützen, da sie das Risiko von Erstarrung oder Einschränkung des Flusses verringert.

Die Verwendung eines Silikonöls als Wärmeübertragungsmedium in einem Ammoniaksynthesereaktor bietet diverse Fördermöglichkeiten für die Temperaturregelung und Effizienz der Ammoniakproduktion. Silikonöl, bekannt für seine thermische Stabilität und Widerstandsfähigkeit gegenüber hohen Temperaturen, eignet sich für den Einsatz in einem Ammoniaksynthesereaktor sowie im Verfahren zur Herstellung von Ammoniak.

Das Silikonöl kann eine präzisere Kontrolle der Temperatur innerhalb des Reaktors ermöglichen, wodurch der Prozess der Umwandlung von Wasserstoff und Stickstoff zu Ammoniak optimiert werden kann. Dank seiner guten Wärmetransporteigenschaften auch bei Temperaturen von 400 °C und darüber und insbesondere bis zu 450 °C wirkt das Silikonöl erfindungsgemäß als ein Medium, das die Wärme gleichmäßig verteilt und Temperaturen stabil hält, wodurch Hotspots oder unerwünschte Temperaturvariationen minimiert werden können.

Die Integration des Silikonöls unterstützt die kontinuierliche und geregelte Katalysatorfunktionalität und kann auch die allgemeine Effizienz der Synthese fördern, indem das Risiko von Koksbildung und anderen störenden Ablagerungen verringert wird. Diese positive Beeinflussung der Reaktionsbedingungen kann die Lebensdauer und Leistungsfähigkeit des Katalysators beeinflussen und dadurch die Produktionskapazität und Qualität des Ammoniaks steigern.

Indem das Silikonöl unter strengen Bedingungen stabil bleibt und keine signifikanten Veränderungen in der chemischen Struktur zeigt, wird eine anhaltende und verlässliche Wärmeübertragung begünstigt, sowohl im Ammoniaksynthesereaktor als auch im gesamten Herstellungsprozess. Diese durchdachte Nutzung kann zur Energieeffizienz und zu Kosteneinsparungen beitragen, während sie die Produktionsprozesse nachhaltiger und umweltschonender gestaltet.

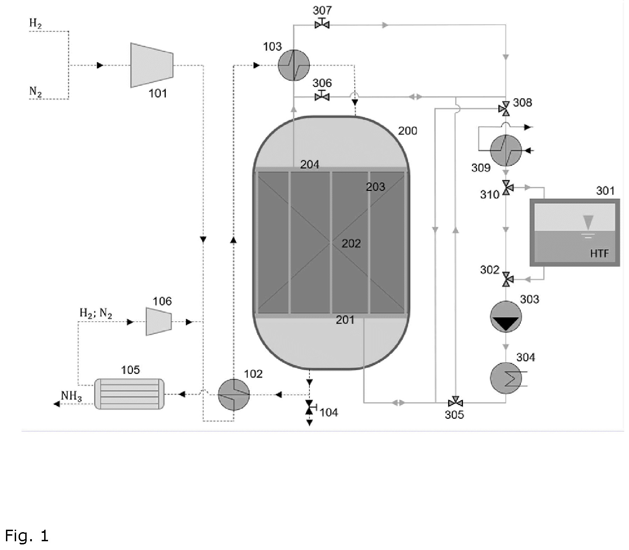

Fig. 1 zeigt ein Schema eines Ammoniaksynthesereaktors mit einem Wärmeübertragungssystem zur Temperaturkontrolle des Katalysatorbetts mittels Silikonöl.

Fig. 1 zeigt das Schema eines Ammoniaksynthesereaktors, der für die Synthese von Ammoniak aus Wasserstoff und Stickstoff geeignet ist in einer bevorzugten Ausgestaltung der vorliegenden Erfindung. Der hier dargestellte Reaktor umfasst ein Reaktorgefäß (200) mit einem Katalysatorbett (202) zur Katalyse der exothermen Reaktion der bereitgestellten Edukte. Um die Temperatur des Katalysatorbetts zu kontrollieren, ist ein Wärmeübertragungssystem integriert, das ein Silikonöl als Wärmeübertragungsmedium einsetzt.

Das System beinhaltet einen Ausdehnungsbehälter (301) zur Speicherung des Silikonöls, der auch als thermischer Energiespeicher fungieren kann. Das Silikonöl kann je nach Betriebszustand des Reaktors in unterschiedliche Richtungen gepumpt werden, was die Flexibilität und bedarfsgerechte Anpassung des erfindungsgemäßen Reaktors ermöglicht. Das Heizen und Kühlen des Katalysatorbetts wird durch die Zirkulation von Silikonöl durch Wärmeübertragerrohre (203) ermöglicht, die entweder thermische Energie aufnehmen oder abgeben können. Die Pumpen (303) sorgen für einen bedarfsgerechten Fluss des Silikonöls durch das System, während die Durchfluss- und Regelventile (306, 307) die genaue Kontrolle des Öl-Massenstroms ermöglichen.

Grundsätzlich kann der erfindungsgemäße Reaktor weiterhin einen thermischen Speicher (nicht in Fig. 1 gezeigt) aufweisen, der mit dem Wärmeübertragungsmedium, insbesondere dem Silikonöl, erwärmt wird. Der thermische Speicher kann beispielsweise Beton, geschmolzenes Salz oder ein anderes bekanntes Speichermaterial aufweisen.

Zudem ist das Wärmeübertragungssystem für einen flexiblen Betrieb ausgelegt: Es ermöglicht sowohl den Niedriglast-Betrieb der Anlage mit aktivem Heizen des Katalysatorbetts als auch die Abstimmung des Systems mit dem Energiebedarf bei fluktuierender Stromversorgung. Der Gas-Fluid-Wärmeübertrager (103) dient der Vorwärmung der Eduktgase. Eine zonale Temperaturregelung entlang des Katalysatorbetts kann realisiert werden, um die Reaktionsbedingungen dynamisch auf die gewünschten Prozessanforderungen anzupassen.

## Patentansprüche

1. Verfahren zur Synthese von Ammoniak, umfassend:
• Bereitstellen von Wasserstoff und Stickstoff als Eduktgase;
• Wahlweise Komprimieren und/oder wahlweise Vorwärmen der Eduktgase;
• Einleiten der Eduktgase in ein Reaktorgefäß mit einem Katalysatorbett;
• Zirkulieren eines auf Silikonöl basierenden Wärmeübertragungsmediums in thermischem Kontakt mit dem Katalysatorbett zur Temperaturregelung des Katalysatorbetts;
• wahlweises Beheizen oder Kühlen des Katalysatorbetts durch Einstellung der Temperatur des Silikonöls;
• Abtrennen von Ammoniak aus dem Reaktorproduktstrom.

2. Verfahren nach Anspruch 1, ferner umfassend das Rückgewinnen von Wärme aus dem Silikonöl nach Durchströmen des Reaktors und die Verwendung der zurückgewonnenen Wärme zum Vorwärmen der Eduktgase, zur Dampferzeugung oder für weitere Prozessanforderungen.

3. Verfahren nach Anspruch 1 oder 2, **dadurch gekennzeichnet, dass** man das Wärmeübertragungsmedium kontinuierlich oder diskontinuierlich getrennt aufreinigt.

4. Verfahren nach zumindest einem der Ansprüche 1 bis 3, wobei das Silikonöl ein Methylpolysiloxan-basiertes Öl ist.

5. Verfahren nach zumindest einem der Ansprüche 1 bis 4, wobei Wärme aus dem Silikonöl zurückgewonnen und für einen weiteren Prozess oder zur Speicherung verwendet wird.

6. Verfahren nach zumindest einem der Ansprüche 1 bis 5, wobei das Katalysatorbett mit Hilfe des Wärmeübertragungsmediums kontinuierlich auch während Zeiten mit reduziertem oder keinem Eduktstrom auf einer Temperatur oberhalb einer Mindestaktivierungstemperatur gehalten wird.

7. Verfahren nach zumindest einem der Ansprüche 1 bis 6, **dadurch gekennzeichnet, dass** das Wärmeübertragungsmedium frei ist von Stabilisatoren.

8. Ammoniaksynthesereaktor, umfassend:
• ein Reaktorgefäß mit einem Katalysatorbett zur Katalyse der Reaktion von Wasserstoff und Stickstoff zur Bildung von Ammoniak;
• ein Wärmeübertragungssystem mit einem Kreislauf zur Zirkulation eines Wärmeübertragungsmediums in thermischem Kontakt mit dem Katalysatorbett;
• wobei das Wärmeübertragungsmedium ein Silikonöl umfasst, das für den Betrieb bei Temperaturen von mindestens 400 °C, bevorzugt bis zu 450 °C geeignet ist;
• wobei das Wärmeübertragungssystem so ausgestaltet ist, dass es das Katalysatorbett durch Zirkulation des Wärmeübertragungsmediums bei gesteuerter Temperatur desselben temperieren kann.

9. Reaktor nach Anspruch 8, wobei das Wärmeübertragungssystem eine Vielzahl von Rohren oder Kanälen umfasst, die im Katalysatorbett eingebettet oder das Katalysatorbett umgebend angeordnet sind und in den Kreislauf des Wärmeübertragungssystems eingebunden sind zur Durchströmung mit dem Wärmeübertragungsmedium.

10. Reaktor nach Anspruch 8 oder 9, ferner umfassend:
• einen Speichertank für das Silikonöl;
• eine Pumpeinrichtung, die dazu ausgebildet ist das Silikonöl zu fördern zur Zirkulation des Silikonöls durch das Wärmeübertragungssystem;
und/oder
• eine Heizeinrichtung, die dazu ausgebildet ist das Silikonöl vor der Zirkulation durch den Reaktor zu erwärmen.

11. Reaktor nach zumindest einem der Ansprüche 8 bis 10, wobei das Wärmeübertragungssystem ferner zur zonalen Temperaturregelung entlang des Katalysatorbetts eingerichtet ist.

12. Reaktor nach zumindest einem der Ansprüche 8 bis 11, wobei das Silikonöl einen Schmelzpunkt unter 0 °C aufweist und bei Temperaturen bis zu 450 °C keine Koksbildung zeigt.

13. Verwendung eines Silikonöls als Wärmeübertragungsmedium in einem Ammoniaksynthesereaktor, insbesondere in einem Ammoniaksynthesereaktor nach einem der Ansprüche 8 bis 12, und/oder in einem Verfahren zur Herstellung von Ammoniak, insbesondere in einem Verfahren nach zumindest einem der Ansprüche 1 bis 7.
